# EUROPÄISCHE PATENTSCHRIFT

(11) **EP 2 477 812 B1**
(45) Veröffentlichungstag und Bekanntmachung des Hinweises auf die Patenterteilung: **23.10.2013**
(21) Anmeldenummer: 10754474.4
(22) Anmeldetag: 13.09.2010
(51) Int. Cl.: B32B 27/36

(54) **KOMBINATION ZWEIER TRIAZIN UV ABSORBER FÜR LACK AUF PC**
COMBINATION OF TWO TRIAZINE UV ABSORBERS FOR COATING ON POLYCARBONATE
COMBINAISON DE DEUX ABSORBEURS UV DE TYPE TRIAZINE POUR VERNIS SUR POLYCARBONATE

(30) Priorität: 19.09.2009 DE 102009042307
(43) Veröffentlichungstag der Anmeldung: 25.07.2012
(73) Patentinhaber: Bayer Intellectual Property GmbH, 40789 Monheim (DE)
(72) Erfinder: MEYER ZU BERSTENHORST, Birgit, 51375 Leverkusen (DE); BUCKEL, Frank, 47906 Kempen (DE); STOLLWERCK, Gunther, 47802 Krefeld (DE)
(74) Vertreter: BIP Patents
(86) Internationale Anmeldenummer: PCT/EP2010/063392
(87) Internationale Veröffentlichungsnummer: WO 2011/032915

(56) Entgegenhaltungen:
- EP-A1- 1 308 084
- WO-A1-2006/108520

## Beschreibung

Die vorliegende Erfindung betrifft ein mehrschichtiges Erzeugnis umfassend mindestens eine erste, zweite und dritte Schicht, wobei die erste Schicht Polycarbonat enthält, die zweite Schicht eine UV-in einem bestimmten Mengenverhältnis, Schutzschicht auf Basis von Alkylacrylat enthaltend, in einem bestimmten Mengenverhältnis, zwei Triazinverbindungen als UV-Stabilisatoren ist, und die dritte eine Kratzfestschicht ist, die ebenfalls UV-Absorber enthält. Außerdem betrifft die Erfindung die Herstellung dieser mehrschichtigen Erzeugnisse und Formkörper, wie z.B. Verscheibungen, die die genannten mehrschichtigen Erzeugnisse enthalten. Formkörper aus Polycarbonat sind bereits seit längerem bekannt. Polycarbonat hat jedoch den Nachteil, dass es nicht selbst inhärent UV-stabil ist. Die Empfindlichkeitskurve von Bisphenol A-Polycarbonat weist die höchste Empfindlichkeit zwischen 320 nm und 330 nm auf. Unterhalb von 300 nm gelangt keine Sonnenstrahlung auf die Erde, und oberhalb von 350 nm ist dieses Polycarbonat so unempfindlich, dass keine Vergilbung mehr stattfindet.

Um Polycarbonat vor dem schädlichen Einfluss der UV-Stahlen in der Atmosphäre zu schützen, werden allgemein UV-Stabilisatoren eingesetzt, die die UV-Strahlung absorbieren und in unschädliche thermische Energie umwandeln.

Vorteilhaft für einen dauerhaften Schutz ist es dabei, die schädliche UV-Strahlung bereits vor Erreichen der Polycarbonatoberfläche effektiv herauszufiltern, wie es durch die Verwendung von UV-Schutz-Schichten, beispielsweise UV-Absorber-haltige Koextrusionsschichten, UV-Absorber-haltige Folien oder auch UV-Absorber-haltige Lacke auf Polycarbonat möglich ist.

Typische UV-Absorber - Klassen, die bekanntermaßen hierfür zum Einsatz kommen können, sind 2-Hydroxy-benzophenone, 2-(2-Hydroxyphenyl)benzotriazole, 2-(2-Hydroxyphenyl)-1,3,5-tri-azine, 2-Cyanacrylate und Oxalanilide.

Zudem ist für Außenanwendungen meist auch noch ein verbesserter Kratzschutz notwendig. Dieser kann durch Aufbringen eines Kratzschutzlackes erfolgen. Hierfür sind Sol-Gel-Silikatlacke (siehe z.B. EP-A 0 339 257, US-A 5,041,313) und andere anorganische Hybridlacke (EP-A 0 570 165) heutiger Stand der Technik. Das Eigenschaftsprofil der organosilan-basierten Lacke schließt außerdem exzellente Wetter- und Lichtstabilität, Widerstandskraft gegen Hitze, Alkali, Lösungsmittel, und Feuchtigkeit ein.

UV-Absorber auf Triazin-Basis weisen in PMMA und UV-härtbaren Acrylatlacken im Vergleich zu anderen UV Absorbern die höchsten Stabilitäten auf. Diese können durch die Zugabe von HALS-Systemen (Hindered Amine Light Stabilizer) noch gesteigert werden (J. Pospisil et al., Prog. Polym. Sci. 25 (2000) 1261-1335).

Die EP-A 1308084 offenbart allgemein die Kombination eines UV-Absorbers auf Triazin-Basis und eines UV-Absorbers auf Benzotriazol-Basis, auch gegebenenfalls mit HALS. Es wird für eine Vielzahl von UV-Absorber-Varianten eine Vielzahl von möglichen Anwendungen offenbart, unter anderem auch der Einsatz in einem Beschichtung. Weder für die Anwendung in Polycarbonat noch für die Anwendung in einer Beschichtungszusammensetzung wird die hier beanspruchte UV-Absorber Kombination konkret beschrieben. Eine willkürliche Kombination aus den Listen oder auch die als bevorzugt bzw. in den Beispielen genannten Kombinationen der in der EP-A 1308084 vorgestellten UV-Absorber geben keinen Hinweis darauf, welche der UV-Absorber ausgewählt werden müssen, um einen Mehrschichtaufbau aus Polycarbonat - UV-Schutzschicht - Kratzfestlack optimal gegen Bewitterung zu schützen.

Die EP-A 0502816 beschreibt die Verwendung von Phenyl- bzw. p-Tolyl-substituierten Triazinen in der Kombination mit HALS in Lacksystemen, z.B. als Deckschutzlack für Automobile.

Die WO 00/66675 A offenbart die Verwendung von biphenyl-substitierten Triazinen, auch in Mischungen, in Klebstoffen in der Kombination mit HALS.

Die WO 2008/107095 A offenbart Polycarbonatzusammensetzungen enthaltend Mischungen eines biphenylsubstituierten Triazinderivats und eines weiteren UV-Absorbers in bestimmten Mengenverhältnissen. Es handelt sich dabei um UV geschütztes, unlackiertes Polycarbonat.

Die WO 2006/108520 A beschreibt die Verwendung von biphenyl-substitierten Triazinen der Formel I in UV-Schutzschichten aus PMMA für Polycarbonat. In der Anmeldung wird auf die Notwendigkeit einer hohen Anfangsextinktion und einer geringen UV-Absorber Degradation während der Bewitterung hingewiesen.

Die vorgenannten Anmeldungen lehren jedoch nichts über die Auswahl einer besonders effizienten Kombination von UV-Absorbern in Mehrschichtsystemen aus Polycarbonatschicht, UV-Schutzschicht und Kratzfestlack.

Die aus dem Stand der Technik bekannten UV-stabilisierten Polycarbonatformkörper weisen in manchen Anwendungen, insbesondere in Außenanwendungen, wo hohe Anforderungen hinsichtlich Kratzfestigkeit und hinsichtlich des dauerhaft guten visuellen Eindrucks erfüllt werden müssen (wie beispielsweise in Verscheibungen), eine noch ungenügende Langzeitstabilität gegen Vergilbung und Trübung auf.

Für die meisten Anwendungen ist es erforderlich, dass ein Polycarbonatformkörper unter einer Einstrahlung von 9 MJ/m² bei 340 nm (entspricht 3 Jahren Außenbewitterung in Florida) möglichst wenig vergilbt und eintrübt.

Die Bewitterung erfolgt bei diesem Test in einem Atlas Ci 5000 Weatherometer mit einer Bestrahlungsstärke von 0.75 W/m² bei 340 nm und einem Trocken/-Beregnungszyklus von 102:18 Minuten über einen Gesamtzeitraum von 3000 Stunden (entspricht 8,1 MJ/m² bei 340 nm). Die Schwarztafeltemperatur beträgt 70°C, die Probenraumtemperatur 55°C und die Luftfeuchtigkeit 40%.

Der vorliegenden Erfindung liegt die Aufgabe zugrunde, kratzfeste Polycarbonatformkörper zur Verfügung zu stellen, die unter einer Einstrahlung von 9 MJ/m² bei 340 nm unter den genannten Bedingungen möglichst wenig vergilben und eintrüben.

Überraschenderweise wurde gefunden, dass für diese Anforderungen ein Mehrschichtaufbau enthaltend bestimmte Kombinationen von UV-Absorbern den nach dem Stand der Technik nach vorgeblich gleichwertigen Kombinationen deutlich überlegen sind. Gegenstand der Erfindung ist somit ein mehrschichtiges Erzeugnis umfassend mindestens eine erste Schicht (A), eine zweite Schicht (B) und eine dritte Schicht (C), wobei die erste Schicht (A) ein Polycarbonat enthält, die zweite Schicht (B) eine UV-Schutzschicht aus Polyalkyl(meth)acrylat ist, die eine Kombination aus in einem bestimmten Verhältnis zueinander UV-Stabilisatoren gemäß Formeln (I) und (II) in einem bestimmten Verhältnis zueinander enthält, und die dritte Schicht (C) eine UV-geschützt Kratzfestschicht ist.

Das erfindungsgemäße mehrschichtige Erzeugnis kann weitere Schichten umfassen, insbesondere eine weitere UV-Schutzschicht (D), die ebenfalls eine Schicht aus Alkylacrylat ist und jeweils mindestens einen UV-Stabilisator beispielsweise ausgewählt aus den oben genannten UV-Absorber-Klassen wie 2-Hydroxy-benzophenone, 2-(2-Hydroxyphenyl)benzotriazole, 2-(2-Hydroxyphenyl)-1,3,5-tri-azine, 2-Cyanacrylate und Oxalanilide, bevorzugte Triazin-Derivate sind UV-Absorber gemäß Formel (I) und (II) enthält, und einer weiteren Kratzfestschicht (E). Die Schichtabfolge beträgt in diesem Fall (C)-(B)-(A)-(D)-(E), und die Schichten (B) und (D) als auch (C) und (E) können jeweils dieselbe oder unterschiedliche Zusammensetzungen haben. Eine weitere mögliche Variante ist, auf der Innenseite lediglich einen Kratzfestschicht enthaltend UV-Absorber aufzutragen, da dort weniger Anforderungen an den UV-Schutz gestellt werden. Hierbei beträgt die Schichtabfolge dann (C)-(B)-(A)-(E).

Der Artikel kann außerdem weitere Beschichtungen enthalten. Neben den Beschichtungen (B),(C), (D), (E) kommen als weitere Beschichtungen (F) beispielsweise IR-absorbierende Schichten, IRreflektierende Schichten, elektrisch leitfähige Schichten, elektroluminisizierende Schichten, Farb- und Druckschichten zu Dekorationszwecken, elektrisch leitfähige Druckschichten, wie sie z.B. für Automobilscheibenheizung verwendet werden, gegebenenfalls auch Heizdrähte enthaltende Schichten, Antiretlexionsschichten, no-drop-Beschichtungen, anti-fog-Beschichtungen, antifingerprint-Beschichtungen und/oder Kombinationen davon in Betracht. Diese Schichten können als Zwischenschichten und/oder als innenseitige Deckschicht aufgebracht bzw. enthalten scin.

Mindestens einer der in den Schichten (B) und gegebenenfalls (D) der erfindungsgemäßen mehrschichtigen Erzeugnissen verwendeten UV-Absorber hat die allgemeine Formel (I) 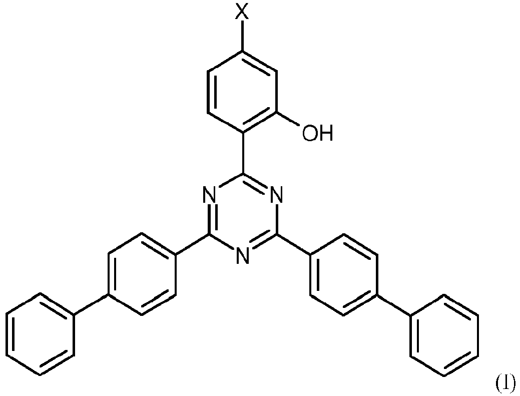 wobei X =OR¹; OCH₂CH₂OR¹; OCH₂CH(OH)CH₂OR¹ oder OCH(R²)COOR³ bedeutet, dabei steht R¹ für jeweils verzweigtes oder unverzweigtes C₁-C₁₃-Alkyl, C₂-C₂₀-Alkenyl, C₆-C₁₂-Aryl oder CO-C₁-C₁₈-Alkyl; R² ist H oder verzweigtes oder unverzweigtes C₁-C₈-Alkyl; und R³ bedeutet C₁-C₁₂-Alkyl; C₂-C₁₂-Alkenyl oder C₅-C₆-Cycloalkyl.

X ist bevorzugt OCH(R²)COOR³; besonders bevorzugt mit R² = CH₃ und R³ = C₈H₁₇.

Mindestens einer der in den Schichten (B) und gegebenenfalls (D) der erfindungsgemäßen mehrschichtigen Erzeugnissen verwendeten UV-Absorber hat die allgemeine Formel (II) 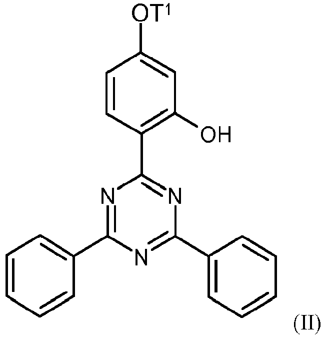 wobei T¹ = C₁-C₁₈-Alkyl oder C₄-C₁₈-Alkyl, unterbrochen durch COO oder OCO oder O, oder unterbrochen durch O und substituiert mit OH, ist.
und die UV-Absorber der Formeln (I) und (II) in der Schicht (B) im Verhältnis UV-Absorber der Formel (I) : UV-Absorber der Formel (II) von 9,9:0,1 bis 6,1:3,9 enthalten sind.
T¹ ist bevorzugt C₁-C₁₈ Alkyl und besonders bevorzugt C₈H₁₇.

Solche biphenylsubstituierten bzw. phenylsubstituierten Triazine der allgemeinen Formeln I und II sind aus WO 96/28431 A, DE-A 19739797; WO 00/66675 A; US-A 6225384; US-A 6255483; EP-A 1 308 084 und FR-A 2812299 prinzipiell bekannt.

Die erfindungsgemäßen UV-Schutzschichten (B) bzw. (D) können weitere UV-Absorber enthalten, die bevorzugt ausgewählt sind aus der Gruppe enthaltend 2-Hydroxy-benzophenone, 2-(2-Hydroxyphenyl)benzotriazole, 2-(2-Hydroxyphenyl)-1,3,5-tri-azine, 2-Cyanacrylate und Oxalanilide.

Bei den erfindungsgemäßen UV-Schutzschichten (B) bzw. (D) kann es sich um gehärtete Lackformulierungen, Folien- oder Coextrusionsschichten handeln.

Erfindungsgemäße UV-Schutzschichten (B) bzw. (D) aus gehärteten Lackformulierungen enthalten als Bindermaterial ein physikalisch trocknendes Polyacrylatharz, enthaltend Methylmethacrylat als Hauptkomponente und eventuell ein weiteres Alkylmethacrylat mit längerer, linearer oder verzeigter Alkylkette (-CₙH₂ₙ₊₁ mit n>1), bevorzugt 1 ≤ n ≤ 10, besonders bevorzugt linear mit n = 3 (Butylmethacrylat). Das Verhältnis der beiden Methacrylateinheiten beträgt 75 bis 100% Methylmethacrylat bzw. 25 bis 0% Alkylmethacrylat, bevorzugt 85 bis 100% Methylmethacrylat bzw. 15% bis 0% Alkylmethacrylat, besonders bevorzugt 90 bis 100% Methylmethacrylat und 10% bis 0% Alkylmethacrylat.

Erfindungsgemäße UV-Schutzschichten (B) bzw. (D) in Form von Folien und Coextrusionsschichten enthalten als Polymermatrix ein Polyacrylat, bestehend aus Alkylmethacrylat, bevorzugt mit Alkylkettenlängen unter 10 Kohlenstoffatomen (-CₙH₂ₙ₊₁ mit n < 10), besonders bevorzugt ausschließlich mit n=1 (Methylmethacrylat).

Da für einen dauerhaften UV-Schutz eine bestimmte Mindestextinktion der UV-Schutzschicht benötigt wird, hängt die erforderliche UV-Absorber Konzentration von der Schichtdicke ab.

Die UV-Absorber der Formeln (I) und (II) in der Schicht (B) werden im Verhältnis UV-Absorber der Formel (I): UV-Absorber der Formel (II) von 9,9:0,1 bis 6,1:3,9, bevorzugt 9:1 bis 7:3, besonders bevorzugt 8,5:1,5 bis 7,5: 2,5 eingesetzt.

Die erfindungsgemäßen UV-Schutzschichten aus gehärteten Lackformulierungen enthalten bei Schichtdicken von 1 bis 100 µm, bevorzugt 1 bis 30 µm, besonders bevorzugt 1 bis 10 µm, 0,5 bis 20 Gew.-%, bevorzugt 1 bis 15 Gew.%, besonders bevorzugt 1,5 bis 10 Gew.-% bezogen auf den Feststoffgehalt der Lackformulierung an Mischungen der UV-Absorber der Formel (I) und (II) in dem oben beschriebenen Mischungsverhältnis, wobei Formulierungen mit Schichtdicken nach Applizieren und Härten von 1 µm mindestens 10 Gew.-%, bevorzugt ≥15 Gew.%, solche von 5 µm mindestens 2 Gew.-%, bevorzugt ≥3 Gew.% und solche von 10 µm mindestens 1 Gew.%, bevorzugt ≥1,5 Gew.% enthalten.

Die erfindungsgemäßen UV-Schutzschichten aus Koextrusionsschichten enthalten bei Schichtdicken von 1 bis 500 µm, bevorzugt 1 bis 100 µm, besonders bevorzugt 2 bis 50 µm, 0,05 bis 20 Gew.-%, bevorzugt 0,1 bis 15 Gew.%, besonders bevorzugt 0,5 bis 10 Gew.-%, an Mischungen der UV-Absorber der Formel (I) und (II) in dem oben beschriebenen Mischungsverhältnis, wobei Koextrusionsschichten mit einer Schichtdicke von 2 µm mindestens 10 Gew.-%, bevorzugt ≥ 15 Gew.-%, solche von 10 µm mindestens 2 Gew.-%, bevorzugt ≥ 3 Gew.% und solche von 30 µm mindestens 0,7 Gew.-%, bevorzugt ≥ 1 Gew.%, enthalten. Die Gewichtsprozente beziehen sich auf das Gesamtgewicht der Schicht (B).

Die erfindungsgemäßen UV-Schutzschichten aus Folien enthalten bei Schichtdicken von 2 µm bis 2 mm, bevorzugt 50 µm bis 1 mm, besonders bevorzugt 80 µm bis 500 µm, 0,01 bis 20 Gew.-%, bevorzugt 0,02 bis 5 Gew.-%, besonders bevorzugt 0,04 bis 2 Gew.-% an Mischungen der UV-Absorber der Formel (I) und (II) in dem oben beschriebenen Mischungsverhältnis, wobei Folien mit einer Schichtdicke von 80 µm mindestens 0,25 Gew.-%, bevorzugt ≥ 0,4 Gew.-%, solche von 200 µm mindestens 0,1 Gew.-%, bevorzugt ≥ 0,15 Gew.% und solche von 500 µm mindestens 0,04 Gew.-%, bevorzugt ≥ 0,06 Gew.%, enthalten. Die Gewichtsprozente beziehen sich auf das Gesamtgewicht der Schicht (B).

Eine weitere Stabilisierung der UV-Schutzschicht kann erzielt werden, indem neben den Triazinen, also den eigentlichen UV-Absorbern, noch sogenannte HALS - Systeme (Hindered Amine Light Stabilizer) der allgemeinen Formel (IIIa) zum Einsatz kommen. 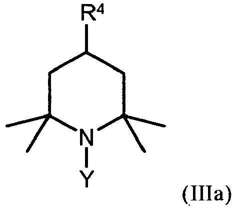
wobei Y = H, R¹ oder OR¹ darstellt und R¹ jeweils verzweigtes oder unverzweigtes C₁-C₁₃-Alkyl, C₂-C₂₀-Alkenyl, C₆-C₁₂-Aryl oder -CO-C₁-C₁₈-Alkyl, R² ist H oder verzweigtes oder unverzweigtes C₁-C₈-Alkyl, und R³ C₁-C₁₂-Alkyl; C₂-C₁₂-Alkenyl oder C₅-C₆-Cycloalkyl bedeutet.
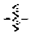 R⁴ setzt sich zusammen aus: Z- R⁵-Z-R⁶; insbesondere 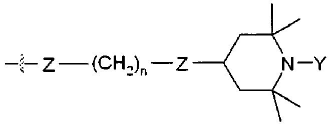 oder 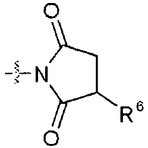 damit ergeben sich folgende Formeln 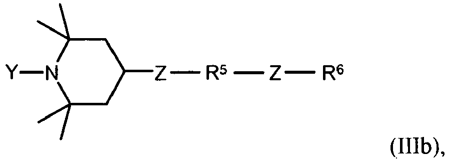 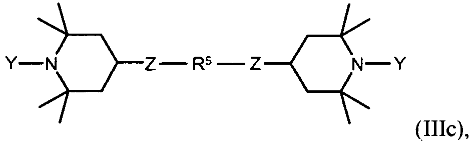 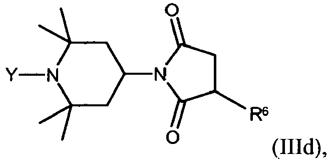 wobei
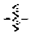 Z 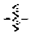 eine divatente funktionelle Gruppe wie 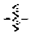 COO 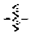 , 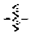 NH 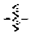 oder 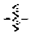 CONH 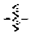 ist.
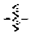 R⁵ 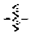 ein divalenter organischer Rest wie - 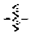 CH₂ 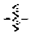 mit n=0 bis 12 oder :C=CH-Ph-OCH₃, 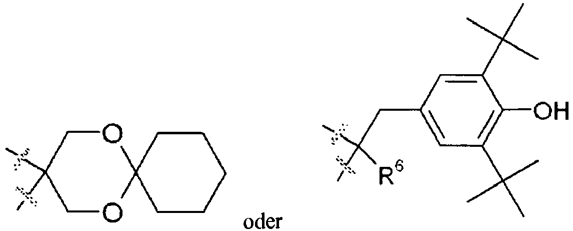 ist.
R⁶ ist H oder C₁-C₂₀-Alkyl.

Bevorzugt ist für UV-Schutzschichten aus gehärteten Lackformulierungen Y = R¹ und 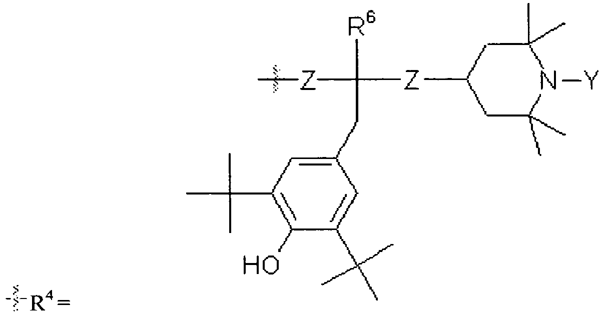 besonders bevorzugt ist Y = R¹ mit R¹=C₁-C₁₃ -Alkyl und

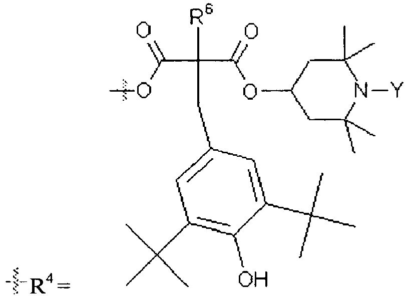

Damit ergibt sich die folgende Gruppe der bevorzugten Verbindungen der allgemeinen Formel (IIIe).

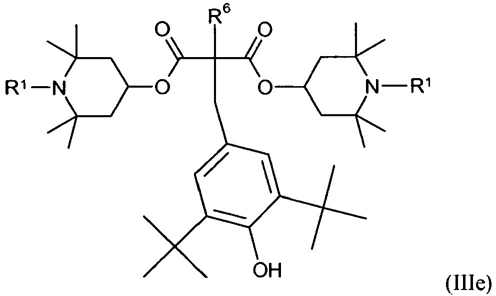

Die erfindungsgemäßen UV-Schutzschichten aus gehärteten Lackformulierungen enthalten dabei 0 bis 5 Gew.%, bevorzugt 0 bis 3 Gew.-%, besonders bevorzugt 0,5 bis 2 Gew.-% der Verbindung der Formel (III) bezogen auf den Feststoffgehalt der Lackformulierung. Bei Verwendung der besonders bevorzugten Menge des besonders bevorzugten HALS Systems (IIIe) reduziert sich die notwendige Menge an UV-Absorber-Mischung aus (I) und (II) auf bevorzugt ≥ 10 Gew.-% bei einer Schichtdicke nach Applizieren und Härten von 1 µm, bevorzugt ≥ 2 Gew.-% bei 5 µm bzw. bevorzugt ≥ 1 Gew.-% bei 10 µm.

Auch im Fall der UV-Schutzschichten aus Koextrusionsschichten bzw. aus Folien können HALS-Systeme in Mengen von 0 bis 3 Gew.-% eingesetzt werden. Hier sind jedoch aufgrund der höheren Verarbeitungstemperaturen höhermolekulare HALS-Systeme zu bevorzugen, bei denen die in der Formel IIIa enthaltene funktionelle Gruppe (IIIf) mehr als zweimal pro Molekül enthalten ist.

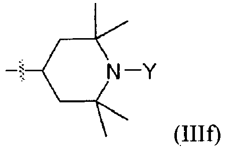

Besonders bevorzugt sind hochmolekulare HALS-Systeme, deren Gewichtsverlust bei 300°C bestimmt über TGA mit einer Heizrate von 20°C pro min in Luft ≤ 3 Gew.% ist, wie beispielsweise die Verbindungen der Formel (IIIg), die beispielsweise als Chimassorb 119 bei der Firma Ciba erhältlich sind.

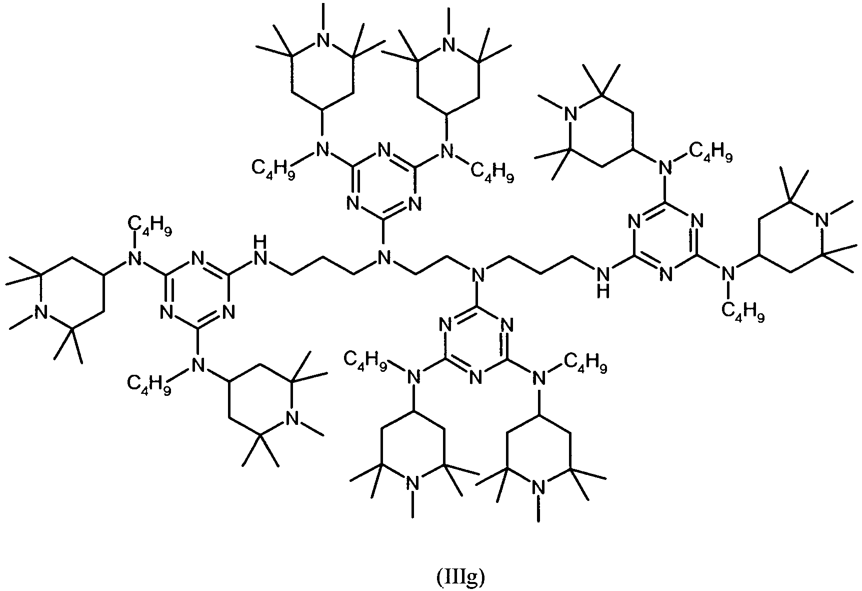

Geeignete Polycarbonate für die Schicht (A) der erfindungsgemäßen mehrschichtigen Erzeugnisse sind alle bekannten Polycarbonate, dies können Homopolycarbonate, Copolycarbonate und thermoplastische Polyestercarbonate sein.

Sie haben bevorzugt mittlere Molekulargewichte M̅_{w} von 18.000 bis 40.000, vorzugsweise von 22.000 bis 36.000 und insbesondere von 24.000 bis 33.000, ermittelt durch Messung der relativen Lösungsviskosität in Dichlormethan oder in Mischungen gleicher Gewichtsmengen Phenol/o-Dichlorbenzol geeicht durch Lichtstreuung.

Zur Herstellung von Polycarbonaten sei beispielhaft auf "Schnell, Chemistry and Physics of Polycarbonats, Polymer Reviews, Vol. 9, Interscience Publishers, New York, London, Sydney 1964", und auf "D.C. PREVORSEK, B.T. DEBONA and Y. KESTEN, Corporate Research Center, Allied Chemical Corporation, Moristown, New Jersey 07960, Synthesis of Poly(ester)carbonate Copolymers' in Journal of Polymer Science, Polymer Chemistry Edition, Vol. 19, 75-90 (1980)", und auf "D. Freitag, U. Grigo, P.R. Müller, N. Nouvertne, BAYER AG, 'Polycarbonates' in Encyclopedia of Polymer Science and Engineering, Vol. 11, Second Edition, 1988, Seiten 648-718" und schließlich auf "Dres. U. Grigo, K. Kircher und P.R. Müller 'Polycarbonate' in Becker/Braun, Kunststoff-Handbuch, Band 3/1, Polycarbonate, Polyacetale, Polyester, Celluloseester, Carl Hanser Verlag München, Wien 1992, Seiten 117-299" verwiesen.

Die Herstellung der Polycarbonate erfolgt vorzugsweise nach dem Phasengrenzflächenverfahren oder dem Schmelze-Umesterungsverfahren und wird im Folgenden beispielhaft an dem Phasengrenz-flächenverfahren beschrieben.

Als Ausgangsverbindungen bevorzugt einzusetzende Verbindungen sind Bisphenole der allgemeinen Formel

HO-R⁷-OH,

worin R⁷ ein divalenter organischer Rest mit 6 bis 30 Kohlenstoffatomen ist, der eine oder mehrere aromatische Gruppen enthält.

Beispiele solcher Verbindungen sind Bisphenole, die zu der Gruppe der Dihydroxydiphenyle, Bis(hydroxyphenyl)alkane, Indanbisphenole, Bis(hydroxyphenyl)ether, Bis(hydroxyphenyl)sulfone, Bis(hydroxyphenyl)ketone und α,α'-Bis(hydroxyphenyl)- diisopropylbenzole gehören.

Besonders bevorzugte Bisphenole, die zu den vorgenannten Verbindungsgruppen gehören, sind Bisphenol-A, Tetraalkylbisphenol-A, 4,4-(meta-Phenylendiisopropyl) diphenol (Bisphenol M), 4,4-(para-Phenylendiisopropyl) diphenol, 1,1-Bis-(4-hydroxyphenyl)-3,3,5-trimethylcyclohexan (BP-TMC) sowie gegebenenfalls deren Gemische.

Bevorzugt werden die erfindungsgemäß einzusetzenden Bisphenolverbindungen mit Kohlensäureverbindungen, insbesondere Phosgen, oder beim Schmelzeumesterungsprozess mit Diphenylcarbonat bzw. Dimethylcarbonat, umgesetzt.

Polyestercarbonate werden bevorzugt durch Umsetzung der bereits genannten Bisphenole, mindestens einer aromatischen Dicarbonsäure und gegebenenfalls Kohlensäureäquivalente erhalten. Geeignete aromatische Dicarbonsäuren sind beispielsweise Phthalsäure, Terephthalsäure, Isophthalsäure, 3,3'- oder 4,4'-Diphenyldicarbonsäure und Benzophenondicarbonsäuren. Ein Teil, bis zu 80 Mol.-%, vorzugsweise von 20 bis 50 Mol-% der Carbonatgruppen in den Polycarbonaten können durch aromatische Dicarbonsäureester-Grüppen ersetzt sein.

Beim Phasengrenzflächenverfahren verwendete inerte organische Lösungsmittel sind beispielsweise Dichlormethan, die verschiedenen Dichlorethane und Chlorpropanverbindungen, Tetrachlormethan, Trichlormethan, Chlorbenzol und Chlortoluol, vorzugsweise werden Chlorbenzol oder Dichlormethan bzw. Gemische aus Dichlormethan und Chlorbenzol eingesetzt.

Die Phasengrenzflächenreaktion kann durch Katalysatoren wie tertiäre Amine, insbesondere N-Alkylpiperidine oder Oniumsalze beschleunigt werden. Bevorzugt werden Tributylamin, Triethylamin und N-Ethylpiperidin verwendet. Im Falle des Schmelzeumesterungsprozesses werden bevorzugt die in DE-A 4 238 123 genannten Katalysatoren verwendet.

Die Polycarbonate können linear oder verzweigt sein. Es könne auch Mischungen aus verzweigten und unverzweigten Polycarbonaten eingesetzt werden.

Die Polycarbonate können durch den Einsatz geringer Mengen Verzweiger bewusst und kontrolliert verzweigt werden. Einige geeignete Verzweiger sind: Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-ethan; Tri-(4-hydroxyphenyl)-phenylmethan; 2,2-Bis-[4,4-bis-(4-hydroxyphenyl)-cyclohexyl]-propan; 2,4-Bis-(4-hydroxyphenyl-isopropyl)-phenol; 2,6-Bis-(2-hydroxy-5'-methyl-benzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäuree ster; Tetra-(4-hydroxyphenyl)-methan; Tetra-(4-(4-hydroxyphenyl-isopropyl)-phenoxy)-methan; α,α,'α"-Tris-(4-hydroxyphenyl)-1,3,5-triisopropylbenzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4"-dihydroxytriphenyl)-methyl)-benzol und insbesondere: 1,1,1-Tri-(4-hydroxyphenyl)-ethan und Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Diphenole, an Verzweigern bzw. Mischungen der Verzweigern, können mit den Diphenolen zusammen eingesetzt werden aber auch in einem späteren Stadium der Synthese zugegeben werden.

Geeignete Verzweiger für Polycarbonate sind aus der Literatur bekannt und beispielsweise beschrieben in den Patentschriften US-B 4 185 009, DE-A 25 00 092, DE-A 42 40 313, DE-A 19 943 642, US-B 5 367 044 sowie in hierin zitierter Literatur. Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind so genannte Fries-Strukturen, wie sie für Schmelzepolycarbonate in der EP-A 1 506 249 offenbart sind. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet in Mengen von 1 - 20 Mol-%, bevorzugt 2 - 10 Mol-% je Mol Bisphenol. Bevorzugt sind Phenol, 4-tert.-Butylphenol bzw. Cumylphenol.

Kettenabbrecher und Verzweiger können getrennt oder aber auch zusammen mit dem Bisphenol den Synthesen zugesetzt werden.

Erfindungsgemäß bevorzugte Polycarbonate für die Schicht A des erfindungsgemäßen mehrschichtigen Erzeugnisses sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Das Homopolycarbonat auf Basis von Bisphenol A ist besonders bevorzugt.

Das Polycarbonat kann Stabilisatoren enthalten. Geeignete Stabilisatoren sind beispielsweise Phosphine, Phosphite oder Si enthaltende Stabilisatoren und weitere in EP-A 0 500 496 beschriebene Verbindungen. Beispielhaft seien Triphenylphosphite, Diphenylalkylphosphite, Phenyldialkylphosphite, Tris-(nonylphenyl)phosphit, Tetrakis-(2,4-di-tert.-butylphenyl)-4,4'-biphenylen-diphosponit und Triarylphosphit genannt. Besonders bevorzugt sind Triphenylphosphin und Tris-(2,4-di-tert.-butylphenyl)phosphit.

Ferner kann die Polycarbonat enthaltende Schicht (A) des erfindungsgemäßen mehrschichtigen Erzeugnisses 0,01 bis 0,5 Gew.-% der Ester oder Teilester von ein- bis sechswertigen Alkoholen, insbesondere des Glycerins, des Pentaerythrits oder von Guerbetalkoholen enthalten.

Einwertige Alkohole sind beispielsweise Stearylalkohol, Palmitylalkohol und Guerbetalkohole.

Ein zweiwertiger Alkohol ist beispielsweise Glycol.

Ein dreiwertiger Alkohol ist beispielsweise Gylcerin.

Vierwertige Alkohole sind beispielsweise Pentaerythrit und Mesoerythrit.

Fünfwertige Alkohole sind beispielsweise Arabit, Ribit und Xylit.

Sechswertige Alkohole sind beispielsweise Mannit, Glucit (Sorbit) und Dulcit.

Die Ester sind bevorzugt die Monoester, Diester, Triester, Tetraester, Pentaester und Hexaester oder deren Mischungen, insbesondere statistische Mischungen, aus gesättigten, aliphatischen C₁₀ bis C₃₆-Monocarbonsäuren und gegebenenfalls Hydroxy-Monocarbonsäuren, vorzugsweise mit gesättigten, aliphatischen C₁₄ bis C₃₂-Monocarbonsäuren und gegebenenfalls Hydroxy-Monocarbonsäuren.

Die kommerziell erhältlichen Fettsäureester, insbesondere des Pentaerythrits und des Glycerins, können herstellungsbedingt <60 % unterschiedlicher Teilester enthalten.

Gesättigte, aliphatische Monocarbonsäuren mit 10 bis 36 C-Atomen sind beispielsweise Caprinsäure, Laurinsäure, Myristinsäure, Palmitinsäure, Stearinsäure, Hydroxystearinsäure, Arachinsäure, Behensäure, Lignocerinsäure, Cerotinsäure und Montansäuren.

Bevorzugte gesättigte, aliphatische Monocarbonsäuren mit 14 bis 22 C-Atomen sind beispielsweise Myristinsäure, Palmitinsäure, Stearinsäure, Hydroxystearinsäure, Arachinsäure und Behensäure.

Besonders bevorzugt sind gesättigte, aliphatische Monocarbonsäuren wie Palmitinsäure, Stearinsäure und Hydroxystearinsäure.

Die gesättigten, aliphatischen C₁₀ bis C₃₆-Carbonsäuren und die Fettsäureester sind als solche entweder literaturbekannt oder nach literaturbekannten Verfahren herstellbar. Beispiele für Pentaerythritfettsäureester sind die der besonders bevorzugten, vorstehend genannten Monocarbonsäuren.

Besonders bevorzugt sind Ester des Pentaerythrits und des Glycerins mit Stearinsäure und Palmitinsäure.

Besonders bevorzugt sind auch Ester von Guerbetalkoholen und des Glycerins mit Stearinsäure und Palmitinsäure und gegebenenfalls Hydroxystearinsäure.

Die erfindungsgemäßen mehrschichtigen Erzeugnisse können neben den erfindungsgemäßen UV-Absorbern und HALS-Systemen organische Farbstoffe, anorganische Farbpigmente, Fluoreszenzfarbstoffe, weitere UV-Absorber außerhalb der UV-Schutzschichten (B) und/oder (D), IR-Absorber und besonders bevorzugt optische Aufheller enthalten.

Die Herstellung der Schicht (A) kann beispielsweise über Extrusion oder Ein- oder Mehrkomponentenspritzgussverfahren erfolgen.

Die Herstellung der erfindungsgemäßen UV-Schutz-Schichten (B) bzw. (D) erfolgt entweder über die Herstellung eines Compounds (a) aus (a1) einem Polyacrylat, bestehend aus Alkylmethacrylat, bevorzugt mit Alkylkettenlängen unter 10 Kohlenstoffatomen (-CₙH₂ₙ₊₁ mit n < 10), besonders bevorzugt ausschließlich mit n=1 (Methylmethacrylat) und (a2) einer Mischung aus einem biphenylsubstituierten Triazin der allgemeinen Formel (I) und einem phenylsubstituierten Triazin der allgemeinen Formel (II). Anschließend wird das Compound (a) entweder (i) mit Polycarbonat in der Weise koextrudiert, dass sich eine dünne UV-Schutzschicht aus Compound (a) gut haftend auf der Polycarbonatoberfläche befindet, oder (ii) das Compound (a) wird zu einer dünnen Folie weiterverarbeitet, die anschließend mit Polycarbonat zu einem gut haftenden Verbund hinterspritzt oder laminiert wird. Die Koextrusion selbst ist vielfältig in der Literatur beschrieben worden. Hierbei lassen sich durch Einsatz von einem oder mehreren Seitenextrudern und einer Mehrkanal-Düse oder gegebenenfalls geeigneten Schmelzeadaptern vor einer Breitschlitzdüse thermoplastische Schmelzen verschiedener Zusammensetzung übereinander legen und somit mehrschichtige Platten oder Folien erzeugen (für die Koextrusion siehe beispielsweise EP-A 0 110 221, EP-A 0 110 238 und EP-A 0 716 919, für Details des Adapter- und Düsenverfahrens siehe Johannaber/Ast:"Kunststoff-Maschinenführer", Hanser Verlag, 2000 und in Gesellschaft Kunststofftechnik: "Koextrudierte Folien und Platten: Zukunftsperspektiven, Anforderungen, Anlagen und Herstellung, Qualitätssicherung", VDI-Verlag, 1990). Zum Thema Folienhinterspritzen siehe unter anderem Plastverarbeiter 47 (1996) Nr.8_18ff

Alternativ erfolgt die Herstellung der erfindungsgemäßen UV-Schutz-Schichten (B) bzw. (D) über das Einbringen (b2) einer Mischung aus einem biphenylsubstituierten Triazin der allgemeinen Formel (I) und einem phenylsubstituierten Triazin der allgemeinen Formel (II) in eine Lackformulierung (b) enthaltend (b1) ein Polyacrylatharz, enthaltend Methylmethacrylat als Hauptkomponente und eventuell ein weiteres Alkylmethacrylat mit längerer, linearer oder verzeigter Alkylkette (-CₙH₂ₙ₊₁ mit n>1), bevorzugt 1 ≤ n ≤ 10, besonders bevorzugt linear mit n = 3 (Butylmethacrylat), und einem oder mehreren Lösemitteln, sowie eventuell weiteren Lackadditiven wie beispielsweise Füllstoffe, Verlaufmittel, Radikalfänger usw.. Anschließend wird die UV-Absorber-haltige Lackformulierung (b) mittels Fluten, Tauchen, Sprühen, Aufwalzen oder Aufschleudern auf die Oberfläche eines Polycarbonatformteils aufgebracht und anschließend physikalisch getrocknet, so dass sich eine gut haftende Beschichtung auf PC ergibt. (Siehe auch: Goldschmidt, Streitberger: Lackiertechnik, BASF Coatings AG, Vincentz Verlag, Hannover, 2002, S. 496ff.)

Die UV-stabilisierten Kratzfestschicht(en) (C) bzw. (E) der erfindungsgemäßen mehrschichtigen Erzeugnisse werden vorzugsweise durch Beschichtung der UV-Schutzschicht(en) bzw. des unbeschichteten Polycarbonates mit kratzfesten bzw. abriebbeständigen Beschichtungssystemen hergestellt. Dazu wird eine Formulierung eines kratzfesten bzw. abriebsbeständigen Lackes, beispielsweise eines Polysiloxanlackes (Sol-Gel-Lack) oder eines Hybridlackes durch Fluten, Tauchen, Sprühen, Aufwalzen oder Aufschleudern auf die Oberfläche der UV-Schutzschicht(en) bzw. des unbeschichteten Polycarbonates aufgebracht und anschließend zu einem gut haftenden Verbund PC / UV-Schutzschicht / Kratzfestschicht bzw. im Falle des Aufbaus (E)-(A)-(B)-(C) zu einem gut haftenden Verbund Kratzfestschicht / PC ausgehärtet.

Sol-Gel-Lacke im Sinne der vorliegenden Erfindung sind Lacke, die nach dem Sol-Gel-Prozess hergestellt werden. Der Sol-Gel-Prozess ist ein Verfahren zur Synthese nichtmetallischer anorganischer oder hybridpolymerer Materialien aus kolloidalen Dispersionen, den sogenannten Solen.

Beispielsweise können solche Sol-Gel-Beschichtungslösungen durch Hydrolyse wässriger Dispersionen von kolloidem Siliziumdioxid und einem Organoalkoxysilan und/oder einem Alkoxysilan oder Mischungen aus Organoalkoxysilanen der allgemeinen Formel RSi(OR')₃ und/oder Alkoxysilanen der allgemeinen Formeln Si(OR')₄ herstellt werden, wobei in den Organoalkoxysilan(en) der allgemeinen Formel RSi(OR')₃ R für einen monovalenten C1 bis C6 - Alkyl-Rest oder für einen ganz oder teilweise fluorierten C1 - C6 - Alkylrest, für eine Vinyl- oder eine Allyl-Einheit, einen Arylrest oder für ein C1 - C6 Alkoxygruppe steht. Besonders bevorzugt ist R eine C1 bis C4-Alkylgruppe, eine Methyl-, Ethyl-, n-Propyl-, iso-Propyl-, tert.-Butyl-, sek.-Butyl-oder n-Butylgruppe, eine Vinyl-, Allyl-, Phenyl- oder substituierte Phenyleinheit. Die -OR' sind unabhängig voneinander ausgewählt aus der Gruppe enthaltend C1 bis C6 - Alkoxygruppen, eine Hydroxygruppe, eine Formyleinheit und eine Acetyl-Einheit. Sol-Gel-Polysiloxanlacke fallen teilweise auch unter die Definition eines Hybridlackes.

Das kolloide Siliziumdioxid ist beispielsweise als z.B. Levasil 200 A (HC Starck), Nalco 1034A (Nalco Chemical Co), Ludox AS-40 oder Ludox LS (GRACE Davison) erhältlich. Als Organoalkoxysilane seien beispielhaft folgende Verbindungen genannt: 3,3,3-Trifluoropropytrimethoxysilan, Methyltrimethoxysilan, Methyltrihydroxysilan, Methyltriethoxysilan, Ethyltrimethoxysilan, Methyltriacetoxysilan, Ethyltriethoxysilan, Phenyltrialkoxysilan (z.B. Phenyltriethoxysilan und Phenyltrimethoxysilan) und Mischungen daraus. Als Alkoxysilane seien beispielhaft folgende Verbindungen genannt: Tetramethoxysilan und Teraethoxysilan und Mischungen daraus.

Als Katalysatoren können beispielsweise organische und/oder anorganische Säuren oder Basen verwendet werden.

In einer Ausfiihrungsform können die kolloiden Siliziumdioxidpartikel auch durch Vorkondensation ausgehend von Alkoxysilanen in situ gebildet werden (siehe hierzu "The Chemistry of Silica", Ralph K. Iler, John Wiley & Sons, (1979), p. 312-461).

Die Hydrolyse der Sol-Gel-Lösung wird durch Zugabe von Lösungsmitteln, bevorzugt alkoholischen Lösungsmitteln wie z.B. Isopropanol, n-Butanol, Isobutanol oder Mischungen daraus, abgebrochen bzw. stark verlangsamt. Anschließend werden ein bzw. mehrere UV-Absorber, die optional in einem Lösungsmittel vorgelöst sind, zu der Sol-Gel Beschichtungslösung gegeben, wonach ein Alterungsschritt von wenigen Stunden oder mehreren Tagen/Wochen eintritt. Des weiteren können noch weitere Additive und/oder Stabilisatoren wie beispielsweise Verlaufsmittel, Oberflächenadditive, Verdickungsmittel, Pigmente, Farbstoffe, Härtungskatalysatoren, IR-Absorber und/oder Haftvermittler zugesetzt werden. Auch die Verwendung von Hexamethyl-disilazan oder vergleichbaren Verbindungen, die zu einer reduzierten Rissanfälligkeit der Beschichtungen führen können, ist möglich (vgl. auch WO 2008/109072 A).

Hybridlacke im Sinne der vorliegenden Erfindung basieren auf der Verwendung von Hybridpolymeren als Bindemittel. Hybridpolymere (Hybride: lat. "von zweierlei Herkunft") sind polymere Werkstoffe, die Struktureinheiten verschiedener Materialklassen auf molekularer Ebene in sich vereinen. Durch ihren Aufbau können Hybridpolymere völlig neuartigen Eigenschaftskombinationen aufweisen. Im Unterschied zu Verbundwerkstoffen (definierte Phasengrenzen, schwache Wechselwirkungen zwischen den Phasen) und Nanokompositen (Verwendung nanoskaliger Füllstoffe) sind die Struktureinheiten von Hybridpolymeren auf molekularer Ebene miteinander verknüpft. Dies gelingt durch chemische Verfahren wie z. B. den Sol-Gel-Prozess, mit dem anorganische Netzwerke aufgebaut werden können. Durch den Einsatz von organisch reaktiven Precursoren z. B. organisch modifizierten Metall-Alkoxiden können zusätzlich organische Oligomer/Polymerstrukturen erzeugt werden. Oberflächenmodifizierte Nanopartikel enthaltende Acrylatlacke, die nach der Härtung ein organisch/anorganisches Netzwerk bilden, werden ebenfalls als Hybridlack definiert. Es gibt thermisch härtbare und UV-härtbare Hybridlacke.

Thermische, UV-stabilisierte Sol-Gel-Lacke sind beispielsweise von der Fa. Momentive Performance Materials unter den Produktbezeichnungen AS4000 und AS4700 erhältlich. Sol-Gel-Polysiloxanlacke besitzen bei Schichtdicken von 1 bis 20 µm, bevorzugt 2 bis 15 µm, besonders bevorzugt 4 bis 12 µm eine Extinktion zwischen 0,2 und 4, bevorzugt 0,2 und 2, besonders bevorzugt 0,3 ≤ Extinktion (Sol-Gel-Schicht) ≤ 1,5.

Mögliche thermisch härtbare Hybridlacke sind kommerziell erhältlich als PHC587B oder PHC587C von der Fa. Momentive Performance Materials, oder auch in EP-A 0 570 165 beschrieben. Die Schichtdicke sollte zwischen 1 bis 20 µm, bevorzugt 3 bis 15 µm besonders bevorzugt 6 bis 8 µm betragen.

UV-härtbare Hybridlacke sind beispielsweise UV-härtbare Acrylatlacke oder UV-härtbare wasserfreie hydrolisierbare Silan-Systeme, wie sie in WO 2008/071363 A oder DE-A 2804283 beschrieben werden. Ein kommerziell erhältliches System ist der UVHC3000 (Momentive Performance Materials). Die Schichtdicke sollte zwischen 1 bis 25 µm, bevorzugt 4 bis 20 µm besonders bevorzugt 8 bis 12 µm betragen. Die Kratzfestschichten auf Basis von Hybridlacken sollten eine Extinktion bei 340 nm zwischen 0,1 und 3, bevorzugt zwischen 0,2 und 2,5, besonders bevorzugt 0,3 ≤ Extinktion (Hybridschicht) ≤ 2 besitzen.

Als UV-Absorber werden wahlweise die kommerziell erhältlichen mäßig polaren, meist hydroxy-haltigen UV-Absorber und/oder anorganische UV-Absorber, wie Titandioxid, Zinkoxid oder Cerdioxid, verwendet (EP-A 0 931 820). Mit einer Alkoxy-silyl(alkyl)-Gruppe modifizierte UV-Absorber für solche Lacksysteme auf der Basis von Resorcinol wurden in US-A 5,391,795 und US-A 5,679,820 offenbart.

Weitere typische UV-Absorber - Klassen, die in der Kratzfestschicht zum Einsatz kommen können, sind 2-Hydroxy-benzophenone, 2-(2-Hydroxyphenyl)benzotriazole, 2-(2-Hydroxyphenyl)-1,3,5-triazine, 2-Cyanacrylate und Oxalanilide. Gebenenfalls ist eine Modifizierung mit einer Gruppe, die zur Erhöhung der Löslichkeit führt, wie beispielsweise einer Alkoxysilylalkylgruppe sinnvoll. Die Maximalkonzentration des UV-Absorbers wird dabei durch seine Löslichkeit bestimmt. Die Minimalkonzentration ergibt sich aus der gewünschten Extinktion der Kratzfestschicht, die mindestens bei 0,2 und 2,5, besonders bevorzugt bei 0,3 ≤ Extinktion (Kratzfestschicht) ≤ 2 liegen sollte. Typisch sind UV-Absorbergehalte zwischen 0,5 und 20 Gew.% bezogen auf den Feststoffgehalt des Kratzfestlackes.

Die Auftragung der Kratzfestschichten erfolgt nach im Stand der Technik bekannten Verfahren (z.B. bake-on-bake-, wet-on-wet-Verfahren) bzw. nach der Vorgabe der Hersteller.

Die mehrschichtigen Erzeugnisse sind bevorzugt ausgewählt aus der Gruppe bestehend aus Platten, Folien und dreidimensionalen Formkörpern.

Ebenfalls Gegenstand der vorliegenden Erfindung ist die Verwendung besagter mehrschichtiger Erzeugnisse insbesondere für Formkörper für die Außenanwendung mit dauerhaft hohen Anforderungen hinsichtlich des visuellen Eindrucks, wie beispielsweise der Verscheibung. Anwendungsbereiche finden sich auch im Bereich von 1 K- bzw. 2K-Spritzgussteilen, beispielsweise in Form von Scheinwerferabdeckscheiben, von Architektur - und von Automobilverscheibungen.

Die Erfindung wird durch die folgenden Beispiele weiter erläutert ohne auf diese beschränkt zu sein. Die erfindungsgemäßen Beispiele geben lediglich bevorzugte Ausführungsformen der vorliegenden Erfindung wieder.

### Beispiele

### Beispiele 1 - 10

### A) Herstellung der UV-Absorberhaltigen PMMA-Lacklösungen

7,2 g Elvacite 2021 (Lucite International, UK) werden in je 36,4 g Diacetonalkohol und Methoxypropanol gelöst. Anschließend werden 0,4 g BYK 300 (BYK Additives and Instruments, Deutschland), 0,14 g Tinuvin 144 (Ciba, Schweiz) und in Summe 0,7 g UV Absorber (Details siehe Beispiele 1 bis 10; die hier genannten Absorber sind kommerziell erhältlich bei der Fa. Ciba, Schweiz) (entsprechend 10 Gew.% bezogen auf den Feststoffgehalt des Lackes) zugegeben. Der Lack wird bis zur vollständigen Lösung der Einzelkomponenten gerührt und über eine Drucknutsche filtriert (2-4 µm Cellulosefilter).

### B) Applikation der UV-Schutzschicht (B)

Polycarbonat (PC)-Platten in optischer Qualität aus Makrolon^{®} 2808 (Beispiele 1 - 5, Bayer MaterialScience AG; mittelviskoses Bisphenol A-Polycarbonat, MVR 10g/10min nach ISO 1133 bei 300°C und 1,2g, ohne UV-Stabilisierung) bzw. Typ Makrolon^{®} AL 2647 (Beispiele 6 - 10, Bayer MaterialScience AG; mittelviskoses Bisphenol A-Polycarbonat mit UV-Stabilisator und Formtrennmittel; MFR 13 g/10min nach ISO1133 bei 300°C und 1,2 kg) werden an einer Klöckner Ferromatik FM160 mit 45er Spritzeinheit bei einer Massetemperatur von 300°C, einer Werkzeugtemperatur von 90°C mit einer Einspritzgeschwindigkeit von ca. 30mm/sec. und einer Zykluszeit von ca. 50 sec. in der Größe 10 x 15 x 0,32cm hergestellt. Diese spritzgegossenen PC-Platten werden 1h bei 120°C getempert, mit Isopropanol gespült und abgelüftet. Anschließend werden die Platten jeweils mit der UV-Absorberhaltigen PMMA-Lacklösung gemäß untenstehenden Beispielen 1-10 beschichtet (Neigungswinkel ca. 25-45%, Temperatur der UV-Schutzlösung 23°C, Raumtemperatur 23°C, relative Luftfeuchte 22%), 10 min. bei Raumtemperatur abgelüftet und die Beschichtung wird bei 120 °C für 30 min. eingebrannt.

### Beispiel 1: (Vergleich)

Als UV-Absorber in der UV-Schutzschicht wurde lediglich 0,7 g Tinuvin 479 (UV-Absorber der allgemeinen Formel (I); CAS Nr. 204848-45-3) verwendet. Die Beschichtung erfolgte auf Makrolon^{®} 2808.

### Beispiel 2: (Vergleich)

Als UV Absorber wurden 0,56 g Tinuvin 479 und 0,14 g Tinuvin 405 (CAS Nr. 137658-79-8; 2-[2-Hydroxy-4-[3-(2-ethylhexyl-1-oxy)-2-hydroxypropyloxy]phenyl]-4,6-bis(2,4-dimethylphenyl)-1,3,5-triazine) verwendet. Die Beschichtung erfolgte auf Makrolon® 2808.

### Beispiel 3: (Vergleich)

Als UV Absorber wurden 0,42 g Tinuvin 479 und 0,28 g Tinuvin 405 verwendet. Die Beschichtung erfolgte auf Makrolon^{®} 2808.

### Beispiel 4: (Vergleich)

Als UV Absorber wurden 0,42 g Tinuvin 479 und 0,28 g Tinuvin 1577 (UV-Absorber der allgemeinen Formel (II); CAS Nr. 147315-50-2; 2-(4,6-diphenyl-1,3,5-triazin-2-yl)-5-(hexyloxy)-phenol) verwendet. Die Beschichtung erfolgte auf Makrolon^{®} 2808.

### Beispiel 5: (Erfindungsgemäß)

Als UV Absorber wurden 0,56 g Tinuvin 479 und 0,14 g Tinuvin 1577 verwendet. Die Beschichtung erfolgte auf Makrolon^{®} 2808.

### Beispiel 6: (Vergleich)

Als UV Absorber werden lediglich 0,7 g Tinuvin 479 verwendet. Die Beschichtung erfolgte auf Makrolon^{®} AL2647.

### Beispiel 7: (Vergleich)

Als UV Absorber wurden 0,56 g Tinuvin 479 und 0,14 g Tinuvin 405 verwendet. Die Beschichtung erfolgte auf Makrolon^{®} AL2647.

### Beispiel 8: (Vergleich)

Als UV Absorber wurden 0,42 g Tinuvin 479 und 0,28 g Tinuvin 405 verwendet. Die Beschichtung erfolgte auf Makrolon^{®} AL2647.

### Beispiel 9: (Vergleich)

Als UV Absorber wurden 0,42 g Tinuvin 479 und 0,28 g Tinuvin 1577 verwendet. Die Beschichtung erfolgte auf Makrolon^{®} AL2647.

### Beispiel 10: (Erfindungsgemäß)

Als UV Absorber wurden 0,56 g Tinuvin 479 und 0,14 g Tinuvin 1577 verwendet. Die Beschichtung erfolgte auf Makrolon^{®} AL2647.

### C) Applikation der Kratzfestschicht (C)

Die mit der UV-Schutzschicht beschichtete Platte wurde auf der beschichteten Seite mit einem kommerziell erhältlichen, UV-Absorberhaltigen Sol-Gel-Lack (AS4700, Momentive Performance Materials) geflutet (Neigungswinkel ca. 25-45%, Temperatur der Kratzfestlösung 23°C, Raumtemperatur 23°C, relative Luftfeuchte 22%). Nach 30 Min. Ablüften bei Raumtemperatur werden die Platten bei 100 °C für eine Stunde gehärtet.

### D) Untersuchungen:

Die Dicke der transparenten Beschichtungen wurde mittels eines Eta SD 30 der Firma Eta Optik GmbH bestimmt.

Es wurden folgende Haftungstests durchgeführt
a.) Klebebandabriss (verwendetes Klebeband 3M Scotch 610-1PK) ohne und mit Gitterschnitt (analog zu ISO 2409 bzw. ASTM D 3359);
b.) Klebebandabriss nach 4 h Lagerung in kochendem Wasser;
c.) Klebebandabriss nach 10 Tagen Lagerung in ca. 65°C warmem Wasser (analog ISO 2812-2 und ASTM 870-02) und alle bestanden, d.h. es kam zu keinerlei Abriss der Beschichtung (Bewertung 0 gemäß ISO 2409 bzw. 5B gemäß ASTM D 3359).

Die Bestimmung der UV-Absorber-Degradation (UVAD) der jeweiligen UV-Absorber bzw. deren Mischung in der hergestellten UV-Schutz-Schicht plus dem UV-Schutz des Kratzfestlackes auf Makrolon^{®} 2808 erfolgte in einem Atlas Ci 5000 Weatherometer mit einer Bestrahlungsstärke von 0,75 W/m²/nm bei 340 nm und einem Trocken/-Beregnungszyklus von 102:18 Minuten über einen Gesamtzeitraum von 3000 Stunden. Die Schwarztafeltemperatur betrug 70°C, die Probenraumtemperatur 55°C und die Luftfeuchtigkeit 40 %.

Beispiele 6-10 wurden ebenfalls in einem Atlas Ci 5000 Weatherometer mit einer Bestrahlungsstärke von 0,75 W/m²/nm bei 340 nm und einem Trocken/-Beregnungszyklus von 102:18 Minuten über einen Gesamtzeitraum von 3000 Stunden bewittert. Die Schwarztafeltemperatur betrug 70°C, die Probenraumtemperatur 55°C und die Luftfeuchtigkeit 40%. Eine UVAD ist aufgrund des UV-Schutzes im Polycarbonat nicht möglich.

Der Yellowness-Index wird wie folgt berechnet: Man bestimmt zunächst die wellenlängenabhängige Vergilbung des Materials nach der spektralen Empfindlichkeitsmethode (Interpretation of the spectral sensivity and of the action spectrum of polymers, P. Trubiroha, Tagungsband der XXII. Donauländergespräche, 17.8.2001, Berlin, Seite 4-1). Dann berechnet man die spektrale Verteilung des UV-Lichtes der Sonne hinter der UV-Schutzschicht. Aus diesen beiden Datensätzen läßt sich auf bekannte Weise durch eine Faltung und Aufintegration über die Zeit die Vergilbung nach Bewitterung berechnen. (Siehe dazu auch: A. Geburtig, V. Wachtendorf, Tagungsband 34. Jahrestagung der Gesellschaft für Umweltsimulation, Umwelteinflüsse erfassen, simulieren und bewerten, 2.3. 2005, Pfinztal, Seite 159).

Die Trübungen wurden gemäß ASTM D 1003 mit einem Haze Gard Plus der Firma Byk-Gardner bestimmt.

Ergebnisse:

**Tab. 1: Beispiele 1-5**

| **Beispiel** | **Gesamtschichtdicke [µm]** | **Anfangstrübung [%]** | **Anfangsextinktion bei 340 nm** | **Trübung nach 3000h Bewitterung [%]** | **YI nach 3000h Bewitterung** | **UVAD [MJ⁻¹] bei 340 nm** |
|---|---|---|---|---|---|---|
| 1 | 11,0 | 0,17 | 3,05 | 2,4 | 4,46 | 0,013 |
| 2 | 10,6 | 0,34 | 2,85 | 2,1 | 4,51 | 0,016 |
| 3 | 10,0 | 0,19 | 2,45 | 1,6 | 4,74 | 0,017 |
| 4 | 10,0 | 3,51 | * | * | * | * |
| 5 | 9,9 | 0,19 | 2,75 | 1,4 | 4,40 | 0,010 |

**Tab. 2: Beispiele 6-10**

| **Beispiel** | **Gesamtschichtdicke [µm]** | **Anfangstrübung [%]** | **Trübung nach 3000h Bewitterung [%]** | **YI nach 3000h Bewitterung** |
|---|---|---|---|---|
| 6 | 10,4 | 0,32 | 0,9 | 1,71 |
| 7 | 10,6 | 0,23 | 0,95 | 1,61 |
| 8 | 10,3 | 0,13 | 0,8 | 1,70 |
| 9 | 10,0 | 5,13 | * | * |
| 10 | 10,0 | 0,21 | 0,7 | 1,61 |

| | | | | |
|---|---|---|---|---|
| *Aufgrund der hohen Anfangstrübung, hervorgerufen durch unvollständig gelöste UV-Absorber, nicht bestimmt. | | | | |

Die Ergebnisse zeigen, dass auf nicht UV-stabilisiertem Polycarbonat (Beispiele 1 bis 5) das erfindungsgemäße Beispiel 5 sowohl die geringste Trübung als auch die geringste Vergilbung nach 3000 h Bewitterung aufweist. Zudem baut das UV-Absorber-Paket von Beispiel 5 am wenigsten ab, d.h. pro Megajoule Strahlungsdosis nimmt die Extinktion bei 340 nm lediglich um UVAD = 0,01 ab. Auch auf UV-stabilisierten Polycarbonat (Beispiele 6 bis 10) wird die niedrigste Trübung nach 3000 h Bewitterung mit dem erfindungsgemäßen Aufbau gefunden (Beispiel 10). Durch den zusätzlichen UV-Schutz im Polycarbonat sind die Bewitterungsbeschädigungen jedoch nicht so stark ausgeprägt, wie bei den Beispielen 1 bis 5, man erkennt jedoch, dass ein vergleichbarer Trend innerhalb der Beispiele erzielt wird.

Zudem zeigt sich, dass eine zu hohe Konzentration an Tinuvin 1577 wie in Beispielen 4 und 9 nicht verwendet werden darf, da offensichtlich die Löslichkeit dieses UV-Absorbers in der UV-Schutzschicht begrenzt ist.

## Patentansprüche

1. Mehrschichtiges Erzeugnis umfassend mindestens eine erste Schicht (A), eine zweite Schicht (B) und eine dritte Schicht (C), wobei die erste Schicht (A) ein Polycarbonat enthält, die zweite Schicht (B) eine UV-Schutzschicht aus Polyalkyl(meth)acrylat ist und eine Kombination enthält aus UV-Stabilisatoren gemäß
Formel (I) 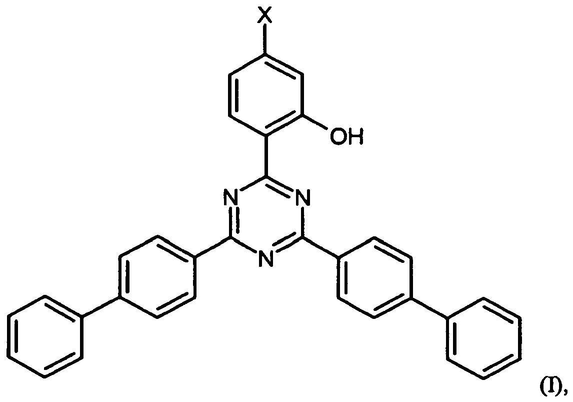
in der X = OR¹ ; OCH₂CH₂OR¹; OCH₂CH(OH)CH₂OR¹ oder OCH(R²)COOR³ bedeutet, wobei R¹ für jeweils verzweigtes oder unverzweigtes C₁-C₁₃-Alkyl, C₂-C₂₀-Alkenyl, C₆-C₁₂-Aryl oder CO-C₁-C₁₈-Alkyl steht; R² für H oder verzweigtes oder unverzweigtes C₁-C₈-Alkyl steht; und R³ C₁-C₁₂-Alkyl; C₂-C₁₂-Alkenyl oder C₅-C₆-Cycloalkyl bedeutet,
und Formel (II) 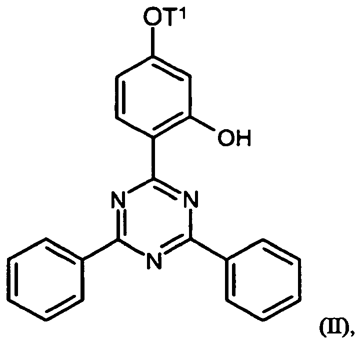
in der T¹ = C₁-C₁₈-Alkyl oder C₄-C₁₈-Alkyl, unterbrochen durch COO oder OCO oder O, oder unterbrochen durch O und substituiert mit OH, bedeutet,
und die UV-Absorber der Formeln (I) und (II) in der Schicht (B) im Verhältnis UV-Absorber der Formel (I): UV-Absorber der Formel (II) von 9,9:0,1 bis 6,1:3,9 enthalten sind,
und die dritte Schicht (C) ein UV-geschützter Kratzfestlack ist,

2. Mehrschichtiges Erzeugnis gemäß Anspruch 1, **dadurch gekennzeichnet, dass** die Schicht (B) bis zu 5 Gew.% bezogen auf die Schicht (B) eines Stabilisators der Formel (IIIa) 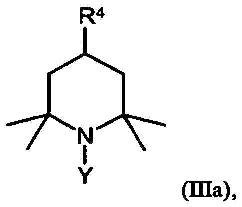
wobei Y = H, R¹ oder OR¹ darstellt und R¹ = jeweils verzweigtes oder unverzweigtes C₁-C₁₃-Alkyl, C₂-C₂₀-Alkenyl, C₆-C₁₂-Aryl oder -CO-C₁-C₁₈-Alkyl, R² = H oder verzweigtes oder unverzweigtes C₁-C₈-Alkyl, und R³ = C₁-C₁₂-Alkyl; C₂-C₁₂-Alkenyl oder C₅-C₆-Cycloalkyl ist, und
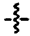 R⁴ sich zusammensetzt aus 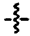 Z- R⁵-Z-R⁶, wobei
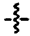 Z 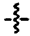 eine divalente funktionelle Gruppe, 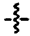 R⁵ 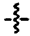 ein divalenter organischer Rest und R⁶ = H oder C₁-C₂₀-Alkyl ist,
enthält.

3. Mehrschichtiges Erzeugnis gemäß Anspruch 2, wobei der Stabilisator der Formel (IIIa) eine Verbindung der allgemeinen Formel 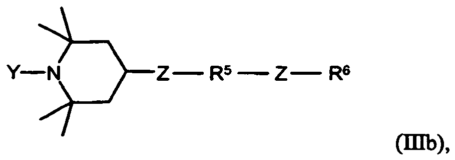 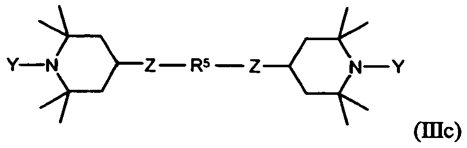 oder 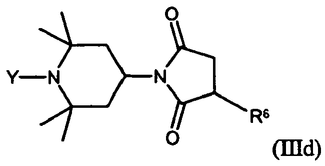 ist,
wobei
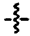 Z 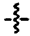 eine divalente funktionelle Gruppe und 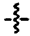 R⁵ 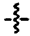 ein divalenter organischer Rest und R⁶ = H oder C₁-C₂₀-Alkyl ist.

4. Mehrschichtiges Erzeugnis gemäß einem der Ansprüche 1 - 3, **dadurch gekennzeichnet, dass** die UV-Absorber der Formeln (I) und (II) in der Schicht (B) im Verhältnis UV-Absorber der Formel (I): UV-Absorber der Formel (II) von 9:1 bis 7:3 eingesetzt werden.

5. Mehrschichtiges Erzeugnis gemäß einem der Ansprüche 1 - 4, weiterhin umfassend eine oder mehrere weitere Schichten, die ausgewählt sind aus der Gruppe enthaltend
a. weitere UV-Schutzschichten (D), die bevorzugt ebenfalls aus Polyalkylmethacrylat sind und jeweils mindestens einen UV-Stabilisator enhalten,
b. weiteren Kratzfestschichten (E).

6. Mehrschichtiges Erzeugnis gemäß einem der Ansprüche 1 - 4, **dadurch gekennzeichnet, dass** es die Schichtfolge (C)-(B)-(A), (C)-(B)-(A)-(D)-(E) oder (C)-(B)-(A)- E) aufweist.

7. Mehrschichtiges Erzeugnis gemäß einem der Ansprüche 1 - 5, **dadurch gekennzeichnet, dass** es weitere funktionelle Schichten (F) umfasst.

8. Mehrschichtiges Erzeugnis gemäß einem der Ansprüche 1 - 7, wobei Schicht (B) eine gehärtete Lackformulierung mit einer Schichtdicke von 1 bis 100 µm ist und der Anteil an UV-Absorbern der Formeln (I) und (II) in Schicht B zusammen 0,5 bis 20 Gew.%, bezogen auf den Feststoffgehalt der Lackformulierung (B), beträgt.

9. Mehrschichtiges Erzeugnis gemäß einem der Ansprüche 1 - 7, wobei Schicht (B) eine Koextrusionsschicht mit einer Schichtdicke von 1 bis 500 µm ist und der Anteil an UV-Absorbern der Formeln (I) und (II) in Schicht (B) zusammen 0,05 bis 20 Gew.%, bezogen bezogen auf das Gesamtgewicht der Schicht (B), beträgt.

10. Mehrschichtiges Erzeugnis gemäß Anspruch 1, wobei Schicht (B) eine Folie mit einer Schichtdicke von 2 µm bis 2 mm ist und der Anteil an UV-Absorbern der Formeln (I) und (II) in Schicht (B) zusammen 0,01 bis 20 Gew.%, bezogen auf das Gesamtgewicht der Schicht (B), beträgt.

11. Mehrschichtiges Erzeugnis gemäß einem der Ansprüche 1 bis 10, **dadurch gekennzeichnet, dass** es sich bei den Schichten (C) und gegebenenfalls (E) um eine UV-Absorberhaltige Lackschicht auf Basis eines Sol-Gel-Siloxanlacks, eines thermisch härtbaren Hybridlacks und/oder eines UV-härtbaren Hybridlacks handelt.

12. Mehrschichtiges Erzeugnis gemäß einem der Ansprüche 1 bis 11, wobei die Schicht (A) durch Extrusion oder Ein- oder Mehrkomponenten-Spritzguss hergestellt wird.

13. Verwendung von mehrschichtigen Erzeugnissen gemäß einem der Ansprüche 1 bis 12 für Außenanwendungen mit dauerhaft hohen Anforderungen hinsichtlich des visuellen Eindrucks, insbesondere für Automobil- und Architektur-Verscheibung.

## Claims

1. Multilayer product comprising at least one first layer (A), one second layer (B) and one third layer (C), where the first layer (A) comprises a polycarbonate, the second layer (B) is a UV-protection layer made of polyalkyl (meth)acrylate and comprises a combination of UV stabilizers according to formula (I) 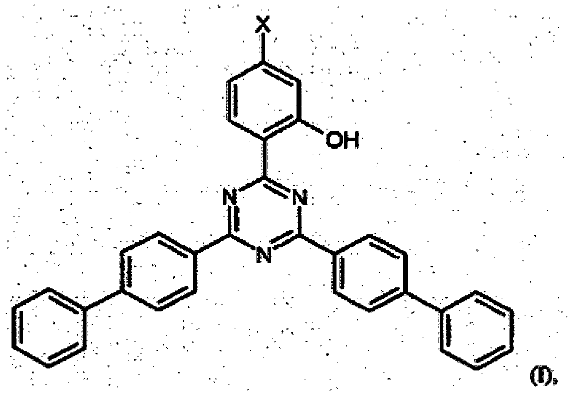
in which X = OR¹; OCH₂CH₂OR¹; OCH₂CH(OH)CH₂OR¹ or OCH(R²)COOR³, where R¹ is respectively branched or unbranched C₁-C₁₃-alkyl, C₂-C₂₀-alkenyl, C₆-C₁₂-aryl or CO-C₁-C₁₈-alkyl; R² is H or branched or unbranched C₁-C₈-alkyl; and R³ is C₁-C₁₂-alkyl; C₂-C₁₂-alkenyl or C₅-C₆-cycloalkyl,
and formula (II) 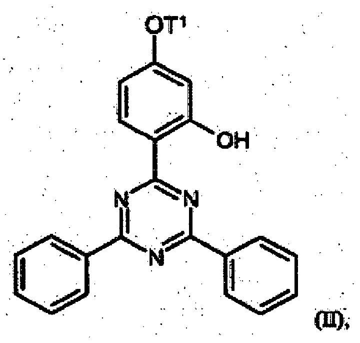
in which T¹ = C₁-C₁₈-alkyl or C₄-C₁₈-alkyl, interrupted by COO or OCO or O, or interrupted by O and substituted with OH,
and the UV absorbers of the formulae (I) and (II) are present in the layer (B) in the ratio UV absorber of the formula (I): UV absorber of the formula (II) = from 9.9:0.1 to 6.1:3.9,
and the third layer (C) is a UV-protected scratch-resistant coating.

2. Multilayer product according to Claim 1, **characterized in that** the layer (B) comprises up to 5% by weight, based on the layer (B), of a stabilizer of the formula (IIIa) 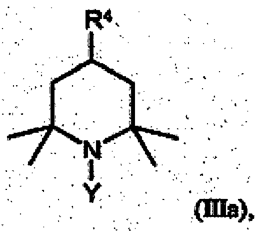
where Y = H, R¹ or OR¹ and R¹ = respectively branched or unbranched C₁-C₁₃-alkyl, C₂-C₂₀-alkenyl, C₆-C₁₂-aryl or -CO-C₁-C₁₈-alkyl, R² = H or branched or unbranched C₁-C₈-alkyl, and R³ = C₁-C₁₂-alkyl; C₂-C₁₂-alkenyl or C₅-C₆-cycloalkyl, and
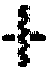 R⁴ is composed of 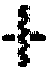 Z-R⁵-Z-R⁶, where
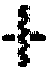 Z 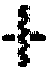 is a divalent functional group, 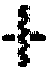 R⁵ 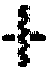 is a divalent organic moiety and R⁶ = H or C₁-C₂₀-alkyl.

3. Multilayer product according to Claim 2, where the stabilizer of the formula (IIIa) is a compound of the general formula 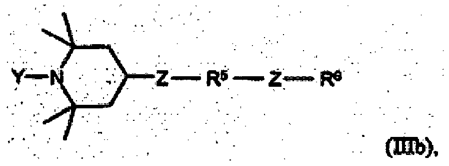 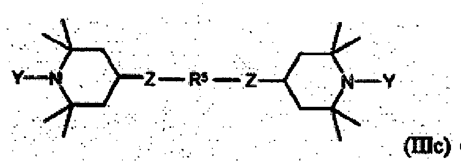 or 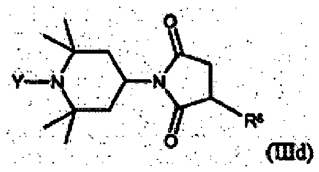 where
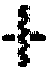 Z 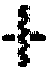 is a divalent functional group and 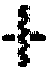 R⁵ 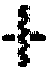 is a divalent organic moiety and R⁶ = H or C₁-C₂₀-alkyl.

4. Multilayer product according to any of Claims 1 to 3, **characterized in that** the UV absorbers of the formulae (I) and (II) are used in the layer (B) in the ratio UV absorber of the formula (I): UV absorber of the formula (II) = from 9:1 to 7:3.

5. Multilayer product according to any of Claims 1 to 4, moreover comprising one or more further layers selected from the group consisting of
a. further UV-protection layers (D), preferably likewise made of polyalkyl methacrylate and respectively comprising at least one UV stabilizer,
b. further scratch-resistant layers (E).

6. Multilayer product according to any of Claims 1 to 4, **characterized in that** it has the layer sequence (C)-(B)-(A), (C)-(B)-(A)-(D)-(E) or (C)-(B)-(A)-(E).

7. Multilayer product according to any of Claims 1 to 5, **characterized in that** it comprises further functional layers (F).

8. Multilayer product according to any of Claims 1 to 7, where layer (B) is a cured coating formulation with a layer thickness of from 1 to 100 µm and the proportion of UV absorbers of the formulae (I) and (II) together in layer B is from 0.5 to 20% by weight, based on the solids content of the coating formulation (B).

9. Multilayer product according to any of Claims 1 to 7, where layer (B) is a coextruded layer with a layer thickness of from 1 to 500 µm and the proportion of UV absorbers of the formulae (I) and (II) together in layer (B) is from 0.05 to 20% by weight, based on the total weight of the layer (B).

10. Multilayer product according to Claim 1, where layer (B) is a foil with a layer thickness of from 2 µm to 2 mm and the proportion of UV absorbers of the formulae (I) and (II) together in layer (B) is from 0.01 to 20% by weight, based on the total weight of the layer (B).

11. Multilayer product according to any of Claims 1 to 10, **characterized in that** the layers (C) and, where appropriate, (E) involve a UV-absorber-containing coating layer based on a sol-gel siloxane coating, on a heat-curable hybrid coating and/or on a UV-curable hybrid coating.

12. Multilayer product according to any of Claims 1 to 11, where the layer (A) is produced via extrusion or single- or multi-component injection moulding.

13. Use of multilayer products according to any of Claims 1 to 12 for external applications with long-lasting stringent requirements in respect of appearance, in particular for panelling in automobiles and in architecture.

## Revendications

1. Produit à plusieurs couches comprenant au moins une première couche (A), une deuxième couche (B) et une troisième couche (C), la première couche (A) contenant un polycarbonate, la deuxième couche (B) étant une couche de protection contre les UV en poly((méth)acrylate d'alkyle) et contenant une combinaison de stabilisants aux UV selon
la formule (I) 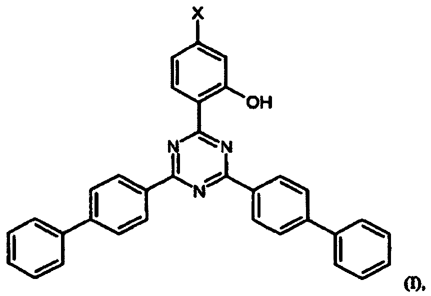
dans laquelle X = OR¹ ; OCH₂CH₂OR¹ ; OCH₂CH(OH)CH₂OR¹ ou OCH(R²)COOR³, R¹ signifiant C₁-C₁₃-alkyle, C₂-C₂₀-alcényle, C₆-C₁₂-aryle ou CO-C₁-C₁₈-alkyle, à chaque fois ramifié ou non ramifié ; R² représente H ou C₁-C₈-alkyle ramifié ou non ramifié ; et R³ signifie C₁-C₁₂-alkyle, C₂-C₁₂-alcényle ou C₅-C₆-cycloalkyle,
et la formule (II) 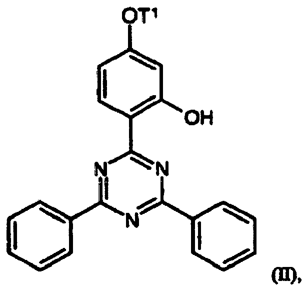
dans laquelle T¹ = C₁-C₁₈-alkyle ou C₄-C₁₈-alkyle, interrompu par COO ou OCO ou O, ou interrompu par O et substitué par OH,
et les absorbants des UV des formules (I) et (II) étant contenus dans la couche (B) dans un rapport absorbant des UV de formule (I):absorbant des UV de formule (II) de 9,9:0,1 à 6,1:3,9,
et la troisième couche (C) étant une laque de résistance aux rayures protégée contre les UV.

2. Produit à plusieurs couches selon la revendication 1, **caractérisé en ce que** la couche (B) contient jusqu'à 5% en poids, par rapport à la couche (B), d'un stabilisant de formule (IIIa) 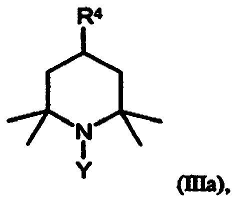 où Y = H, R¹ ou OR¹ et R¹ = C₁-C₁₃-alkyle, C₂-C₂₀-alcényle, C₆-C₁₂-aryle ou CO-C₁-C₁₈-alkyle, à chaque fois ramifié ou non ramifié, R² = H ou C₁-C₈-alkyle ramifié ou non ramifié, et R³ = C₁-C₁₂-alkyle, C₂-C₁₂-alcényle ou C₅-C₆-cycloalkyle, et
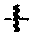 R⁴ est composé de : 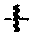 Z-R⁵-Z-R⁶, où
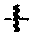 Z 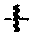 représente un groupe fonctionnel divalent, 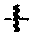 R⁵ 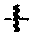 représente un radical organique divalent et R⁶ = H ou C₁-C₂₀-alkyle.

3. Produit à plusieurs couches selon la revendication 2, le stabilisant de formule (IIIa) étant un composé de formule générale 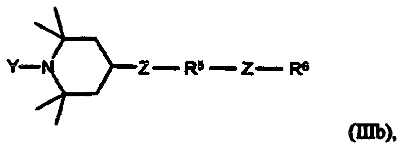 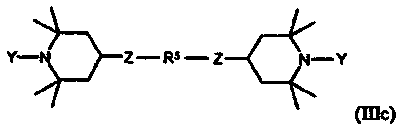 ou 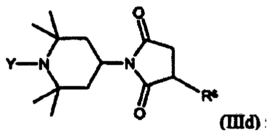 où
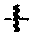 Z 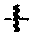 représente un groupe fonctionnel divalent, 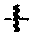 R⁵ 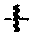 représente un radical organique divalent et R⁶ = H ou C₁-C₂₀-alkyle.

4. Produit à plusieurs couches selon l'une quelconque des revendications 1 à 3, **caractérisé en ce que** les absorbants des UV des formules (I) et (II) sont contenus dans la couche (B) dans un rapport absorbant des UV de formule (I):absorbant des UV de formule (II) de 9:1 à 7:3.

5. Produit à plusieurs couches selon l'une quelconque des revendications 1-4, comprenant en outre une ou plusieurs autres couches, choisies dans le groupe contenant
a. d'autres couches de protection contre les UV (D), qui sont de préférence également en poly(méthacrylate d'alkyle) et qui contiennent à chaque fois au moins un stabilisant aux UV,
b. d'autres couches de résistance aux rayures (E).

6. Produit à plusieurs couches selon l'une quelconque des revendications 1 à 4, **caractérisé en ce qu'**il présente l'ordre des couches (C)-(B)-(A), (C)-(B)-(A)-(D)-(E) ou (C)-(B)-(A)-(E).

7. Produit à plusieurs couches selon l'une quelconque des revendications 1 à 5, **caractérisé en ce qu'**il comprend d'autres couches fonctionnelles (F).

8. Produit à plusieurs couches selon l'une quelconque des revendications 1-7, la couche (B) étant une formulation de laque durcie d'une épaisseur de couche de 1 à 100 µm et la proportion d'absorbants des UV des formules (I) et (II) dans la couche B valant ensemble 0,5 à 20% en poids, par rapport à la teneur en solides de la formulation de laque (B).

9. Produit à plusieurs couches selon l'une quelconque des revendications 1-7, la couche (B) étant une couche de coextrusion d'une épaisseur de couche de 1 à 500 µm et la proportion des absorbants des UV des formules (I) et (II) dans la couche (B) valant ensemble 0,05 à 20% en poids, par rapport au poids total de la couche (B).

10. Produit à plusieurs couches selon la revendication 1, la couche (B) étant une feuille présentant une épaisseur de couche de 2 µm à 2 mm et la proportion des absorbants des UV des formules (I) et (II) dans la couche (B) valant ensemble 0,01 à 20% en poids, par rapport au poids total de la couche (B).

11. Produit à plusieurs couches selon l'une quelconque des revendications 1 à 10, **caractérisé en ce qu'**il s'agit, pour les couches (C) et le cas échéant (E), d'une couche de laque contenant un absorbant des UV à base d'une laque de siloxane sol-gel, d'une laque hybride thermodurcissable et/ou d'une laque hybride durcissable aux UV.

12. Produit à plusieurs couches selon l'une quelconque des revendications 1 à 11, la couche (A) étant préparée par extrusion ou par moulage par injection à un ou plusieurs composants.

13. Utilisation d'objets à plusieurs couches selon l'une quelconque des revendications 1 à 12 pour des applications extérieures avec des exigences élevées durables en ce qui concerne l'impression visuelle, en particulier pour le vitrage automobile et architectural.
